# EUROPEAN PATENT APPLICATION

(11) **EP 4 789 930 A1**
(43) Date of publication of application: **12.08.2026**
(21) Application number: 26151781.7
(22) Date of filing: 14.01.2026
(51) Int. Cl.: B60T 5/00, F16D 55/36, F16D 65/78, F16D 65/847

(54) **BRAKE HEAT SHIELDS**

(30) Priority: 07.02.2025 US 202519048508
(71) Applicant: Honeywell International Inc., Charlotte, NC 28202 (US)
(72) Inventor: SHULA, Brian, Charlotte, 28202 (US); WURTZ, Zachary, Charlotte, 28202 (US); PARSONS, Abigail, Charlotte, 28202 (US); PEREYRA CARBALLAL, Lili Jazmin, Charlotte, 28202 (US); BEEHLER, Jonathan T., Charlotte, 28202 (US); MAJNERT, Tomasz, Charlotte, 28202 (US)
(74) Representative: Haseltine Lake Kempner LLP

(57) **Abstract**

A brake heat shield may include a heat shield body and at least one louver. The at least one louver may include a louver opening defined by the heat shield body and a louver body extending from the heat shield body. An assembly may include the brake heat shield between a brake piston housing and a brake stack. A technique may include additively depositing the heat-resistant material to form the brake heat shield.

## Description

### TECHNICAL FIELD

The present disclosure relates to brake heat shields.

### BACKGROUND

Vehicles, such as aircrafts, may use a wheel brake system that includes a multi-disc brake assembly. For example, the multi-disc brake assembly may include a plurality of rotors engaged with a wheel and a plurality of stators interleaved with the rotors. The rotors and wheel are configured to rotate around an axle, while the stators remain rotationally stationary. To decelerate rotational motion of a rotating wheel, the brake assembly may displace pistons against a pressure plate to squeeze the rotating rotors attached to the wheel against the stationary stators, therefore producing torque that decelerates the rotational motion of the wheel. This process generates heat within the rotors and the stators.

Wheel assemblies in operation may be exposed to heat. For example, braking assemblies may generate heat in course of operation, for example, arising from friction. Further, brakes may remain at elevated temperatures and require significant time to cool after landing. Such heat may be transferred to wheels, which may further increase wheel temperature.

### SUMMARY

In general, the disclosure describes brake heat shields, assemblies including brake heat shields, and techniques for forming brake heat shields. Brake heat shields are configured to resist heat transfer toward a brake piston housing, for example, from a brake stack. Thus, brake heat shields may prevent or reduce heating to brake piston housings that could compromise their structural integrity or performance. The brake heat shields may also protect hydraulic fluid temperature, extending a maintenance window of the brake assembly. Brake heat shields according to the present disclosure include at least one louver. The louver may promote flow of air from an inboard side to an outboard side across a brake heat shield, which in turn may promote cooling of a brake assembly. For example, the louver may promote free air cooling and entrain airflow while a vehicle is moving. Further, buoyancy may cause cool air to be drawn through the louver into the brake assembly, and hot air to be expelled, when a vehicle is stationary.

In some examples, an example brake heat shield includes a heat shield body and a plurality of louvers. Each louver of the plurality of louvers may include a respective louver opening defined by the heat shield body and a respective louver body extending from the heat shield body.

In some examples, an example assembly includes a brake piston housing, a brake stack, and a brake heat shield between the brake piston housing and the brake stack. The brake heat shield includes a heat shield body and a plurality of louvers. Each louver of the plurality of louvers may include a respective louver opening defined by the heat shield body and a respective louver body extending from the heat shield body.

In some examples, an example technique includes forming a brake heat shield. The brake heat shield includes a heat shield body and a plurality of louvers. Each louver of the plurality of louvers may include a respective louver opening defined by the heat shield body and a respective louver body extending from the heat shield body.

The details of one or more examples are set forth in the accompanying drawings and the description below. Other features, objects, and advantages will be apparent from the description and drawings, and from the claims.

### BRIEF DESCRIPTION OF THE FIGURES

FIG. 1A is a front view illustrating an example brake heat shield including a heat shield body and a plurality of louvers.
FIG. 1B is a schematic cross-sectional view showing an air flow path across a louver of the plurality of louvers of FIG. 1A.
FIG. 1C is a partial perspective view of the brake heat shield of FIG. 1A showing a first sub-plurality of louvers that are inset toward an outboard direction.
FIG. 1D is a partial perspective view of the brake heat shield of FIG. 1A showing a second sub-plurality of louvers that are outset toward an inboard direction.
FIG. 1E is a schematic cross-sectional view showing an air flow path across a louver of the second sub-plurality of louvers of FIG. 1D.
FIG. 2 is a front view of an example brake heat shield including a plurality of louvers arranged in a chevron pattern.
FIG. 3 is a front view of an example brake heat shield including a plurality of louvers arranged in a curved pattern.
FIG. 4 is a front view of an example brake heat shield including a plurality of louvers having different lengths.
FIG. 5 is a front view of an example brake heat shield having an octagonal peripheral edge.
FIG. 6 is cross-sectional view illustrating an example brake heat shield including a plurality of shield walls defining a plurality of louvers.
FIG. 7A is a front view of an example brake heat shield including an additively manufactured shield body.
FIG. 7B is a partial perspective view of the brake heat shield of FIG. 7A.
FIG. 8 is a perspective view illustrating an example wheel including a plurality of rotor drive keys on an interior surface of the wheel.
FIG. 9 is a schematic cross-sectional view of an example wheel and brake assembly including the wheel of FIG. 8.
FIG. 10 is a block diagram illustrating an example system for additively manufacturing a brake heat shield.
FIG. 11 is a flow diagram illustrating an example technique for forming a brake heat shield.

### DETAILED DESCRIPTION

In general, the disclosure describes brake heat shields, assemblies including brake heat shields, and techniques for forming brake heat shields. A brake heat shield is positioned between a brake piston housing and a heat-generating component (e.g., a brake stack). The brake heat shield is configured to resist heat generated by operation of the brake stack (e.g., by frictional contact) from being transferred to the brake piston housing. A brake heat shield may include a heat shield body and one or more louvers. A louver may include a louver opening defined by the heat shield body and a louver body extending from the heat shield body. The brake heat shield may promote cooling of the brake assembly by promoting air flow through the louver to the brake assembly, which in turn may dissipate heat away from the brake assembly.

The louvers may thus promote free air cooling around a brake, and entrain additional airflow while a vehicle including the wheel assembly (e.g., an aircraft) is moving. For example, the louvers may cause cool air to move toward a heat sink, using buoyancy forces. Angled louvers may entrain air while the vehicle is moving. Multiple louvers may be arranged in predetermined louver configurations (e.g., chevron or other patterns) configured to draw in air while the aircraft is moving, and which work on lefthand and right-hand brakes positions. The louvers may improve airflow while the vehicle is stationary, using buoyancy. The relatively faster cooling rates may lead to shorter turnaround times for the vehicle (e.g., time for reuse after a prior use).

In aircraft, high temperatures after a landing can cause antioxidant (AO) degradation, excessive torque tube creep if parking brakes are applied while the brake is hot, or seal degradation around the piston bushing assembly. Thus, cooler temperatures may promote the integrity of brake structural components during vehicle maneuvers (e.g., post-landing taxi stops or parking for aircraft). Likewise, reduced high temperature exposure leads to less antioxidant degradation oxidation, and to less degradation of other components (e.g., piston bushing assembly seal degradation). Brake cooling can reduce damage to brake hardware following high-energy events (e.g., landings for aircraft), and they can allow the vehicle to be redeployed relatively quickly (e.g., an aircraft may begin taxiing for the next flight sooner after a landing). For example, the brake temperature monitor sensor (BTMS) may reduce below a specified limit relatively quickly, permitting aircraft operation to be resumed sooner than in cases where brake temperatures reduce to the specified limit relatively slowly. Further, brake design enhancements that increase cooling rates can increase margins of safety associated with high temperature load applications.

The louvers can be arranged along a brake heat shield in any predetermined configuration. In some examples, at least some louvers may be positioned at a "12 o'clock" orientation (e.g., at a top of the brake heat shield), and such louvers may pull air from an inboard side of the brake heat shield up and toward a heat sink, an inboard flange, and tire. Louvers positioned at "5 o'clock" and "7 o'clock" orientations (e.g., circumferentially adjacent a bottom of the brake heat shield) may pull air from the inboard side of the heat shield up and toward the heat sink and torque tube.

The brake heat shield may be single- or multi-layered. For example, a multi-layered brake heat shield may include two or more heat shield bodies extending parallel to each other, and each heat shield body may define one or more louvers. In some examples, louvers in the two or more heat shield bodies may be offset (e.g., in a radial and/or a circumferential direction) to prevent line-of-sight between a heat source and structural components (to prevent or reduce radiative heating of the structural components).

The louvers may be oriented in circumferential, flat, or chevron configurations to maximize airflow. Chevron and partial arc configurations may entrain air while the vehicle is moving, and may not be sensitive to left hand or right hand side installation, due to symmetry. Louvers may be placed anywhere on the brake heat shield, but may promote relatively higher flow in upper and lower quadrants of the brake heat shield.

Further, brake heat shields according to the present disclosure may be fabricated in segments by additive manufacturing techniques, reducing the complexity of assembly, and reducing labor required to assemble components of brake heat shields. For example, using additive manufacturing to fabricate brake heat shields including louvers may reduce costs and weight, because brake heat shield segments or entire shields may be printed as unitary pieces, removing the need for metal work operations such as forming, welding, or riveting. Additive manufacturing may enable formation of a layer heat shield with louvers that overhang corresponding openings (in contrast, a stamped louver cannot extend beyond the corresponding opening in view of the nature of a subtractive machining process). For example, such a configuration may provide a thermal benefit of reducing the radiative heat transfer compared to a subtractive machined (e.g., stamped) configuration. An additive configuration may be formed in parts or segments to fit in an additive build chamber. Additive parts with louvers and stamped sheet metal may be laser-welded together if made from the same or compatible material (e.g., 300-series stainless steel).

Thus, brake heat shields according to the present disclosure may promote cooling of wheel assemblies, thus promoting structural integrity and performance of wheels and tires, and reducing a thermal exposure of hydraulic fluid.

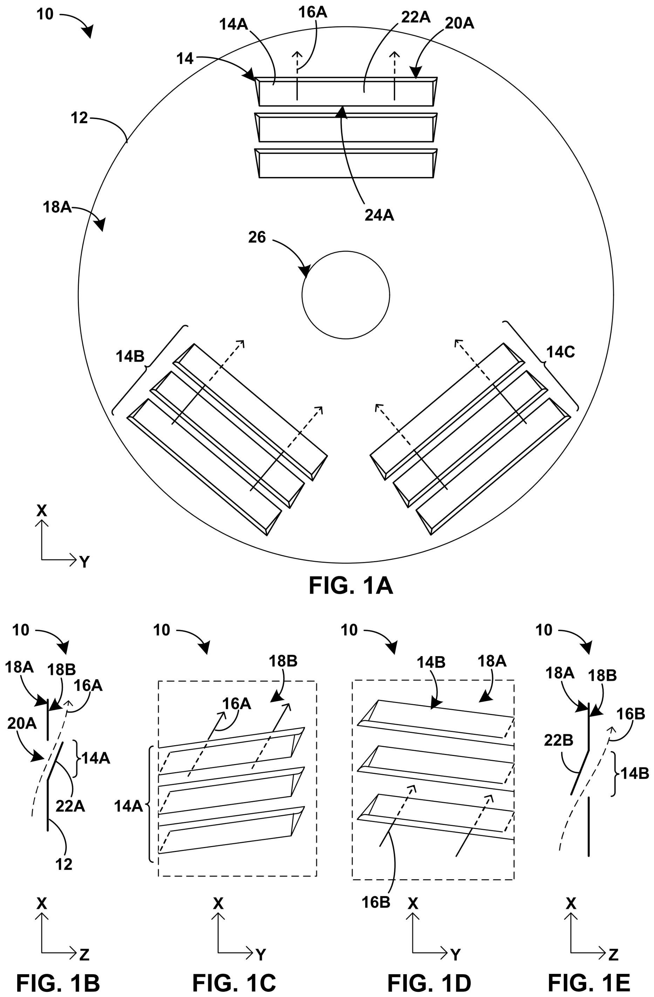

FIG. 1A is front view illustrating an example brake heat shield 10 including a heat shield body 12 and a plurality of louvers 14. FIG. 1B is a schematic cross-sectional view showing an air flow path 16A across a louver 14A of plurality of louvers 14 of FIG. 1A.

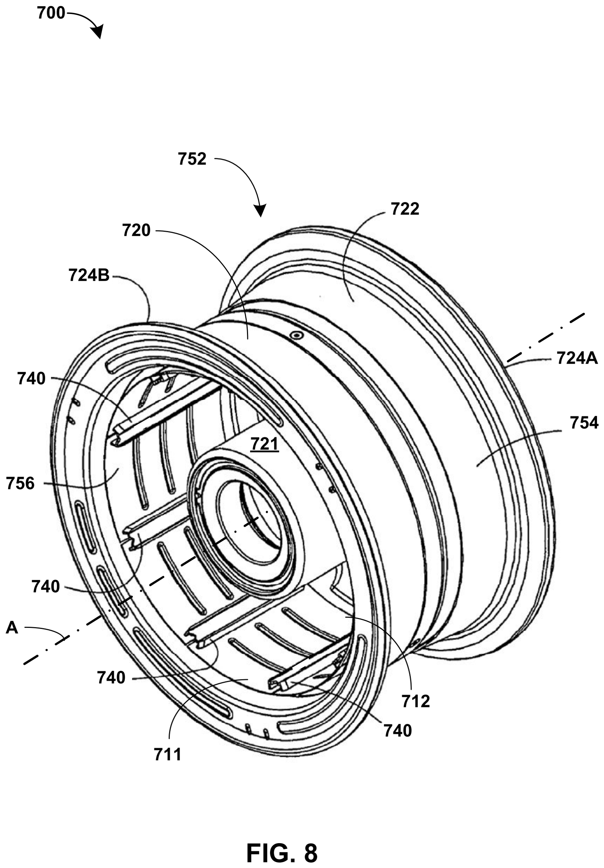

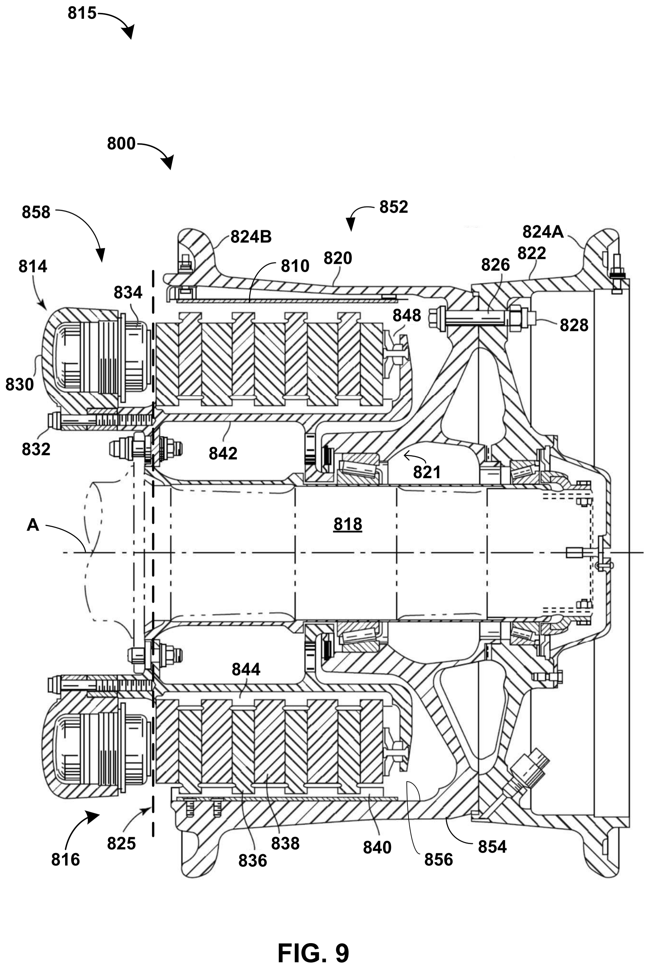

Heat shield body 12 defines an inboard face 18A and an outboard face 18B opposing inboard face 18A. For example, outboard face 18B may face a tire mounted on a wheel, and inboard face 18B may face an opposite direction. Brake heat shield 10 is configured to be secured to between a brake piston housing and a brake stack (for example, as described with reference to FIGS. 8 and 9), and to act as a thermal barrier between the brake piston housing, and a heat-generating component (e.g., the brake stack). Plurality of louvers 14 facilitates cooling of the wheel assembly (e.g., by promoting air flow across brake heat shield 10 to dissipate heat away from the wheel) when brake heat shield 10 is secured between the brake piston housing and a brake stack. While not shown in FIG. 1A, heat shield body 12 may define a plurality of piston openings configured to allow respective pistons to extend across heat shield body 12 and engage against the brake stack.

Each louver of plurality of louvers 14 includes a respective louver opening and a respective louver body. For example, louver 14A includes a louver opening 20A defined by heat shield body 12, and a louver body 22A extending from heat shield body 12. For example, louver opening 20A may be a gap, a window, or some other opening defined in heat shield body 12 and extending between inboard face 18A and outboard face 18B of heat shield body 12. Thus, air may flow along air flow path 16A from one side of heat shield body 12 (e.g., approaching toward inboard face 18A) to another side of heat shield body 12 (e.g., exiting away from outboard face 18B).

Louver body 22A and heat shield body 12 may be formed of the same or different materials. In some examples, louver body 22A is formed integrally with or from heat shield body 12 (e.g., by stamping, punching, additive manufacturing or some other machining process), and thus, the material of a bulk of louver body 22A may be substantially the same as that of heat shield body 12. In some such examples, brake heat shield 10 as a whole may be unitary or integral. For example, louver body 22A may be formed of a same or different metal or alloy (or any other material or composite) as heat shield body 12. In other examples, louver body 22A may be formed separately (e.g., from a different material) and may be attached to heat shield body 12, and thus, differ in composition from heat shield body 12.

At least one louver 14A of plurality of louvers 14 extends along a straight line. In some examples, as shown in FIG. 1A, each louver of plurality of louvers 14A extends along a straight line. However, in other examples, one, more than one, less than all, or all of plurality of louvers 14 (or a sub-plurality of louvers 14) may extend along any suitable path, for example, a curved path, a zig-zag path, an undulating path, or some complex path.

Louver body 22A may be substantially coextensive with louver opening 20A. For example, louver body 22A may extend between ends of louver opening 20A, in a direction along a major axis of louver 14A (i.e., along a length of louver 14A). In some examples, as shown in FIG. 1A, louver body 22A has closed ends (i.e., ends of louver body 22A extend to contact corresponding ends of louver opening 20A along the major axis of louver 14A). In other examples, louver body 22A has open ends (i.e., ends of louver body 22A are spaced from corresponding ends of louver opening 20A along the major axis of louver 14A). In some examples, louver body 22A extends continuously from heat shield body 12, e.g., from a long edge 24A of louver opening 20A. In other examples, at least a portion of louver body 22A is spaced from long edge 24A of louver opening 20A.

Plurality of louvers 14 may extend in any predetermined direction along heat shield body 12. In some examples, at least one louver of plurality of louvers 14 extends in a direction disposed at an acute or an obtuse angle relative to a radial axis of heat shield body 12 (e.g., at an intersection of the radial axis and a geometric center of the louver). In other examples, at least one louver of plurality of louvers 14 extends in a direction normal to the radial axis of heat shield body 12 (e.g., at an intersection of the radial axis and a geometric center of the louver). In some examples, at least two louvers of plurality of louvers 14 extend in different directions relative to the radial axis intersecting the respective geometric centers of the louvers. In some examples, each louver of plurality of louvers 14 extends in the same direction relative to the radial axis intersecting the respective geometric centers of the louvers. For example, in FIG. 1A, two louvers adjacent louver 14A extend in the same direction as louver 14A, and thus form a sub-plurality of louvers extending in the same direction along heat shield body 12. Thus, plurality of louvers 14 includes at least one louver 14A parallel to at least one other louver.

At least one louver 14 may have any suitable average, minimum, or maximum, width, length, or average inter-louver distance. In some examples, an average, minimum, or maximum inter-louver radial distance of plurality of louvers 14 is at least 10%, at least 20%, at least 30%, at least 40%, or at least 50% of the maximum diameter of heat shield body 12. In some examples, the average, minimum, or maximum inter-louver radial distance of plurality of louvers 14 is less than or equal to 50%, less than or equal to 40%, less than or equal to 30%, less than or equal to 20%, or less than or equal to 10% of the maximum diameter of heat shield body 12.

In some examples, an average, minimum, or maximum inter-louver circumferential distance of plurality of louvers 14 is at least 10%, at least 20%, at least 30%, at least 40%, or at least 50% of the maximum diameter of heat shield body 12. In some examples, the average, minimum, or maximum inter-louver circumferential distance of plurality of louvers 14 is less than or equal to 50%, less than or equal to 40%, less than or equal to 30%, less than or equal to 20%, or less than or equal to 10% of the maximum diameter of heat shield body 12.

Louver opening 20A may have any suitable width (e.g., in a radial direction). For example, louver opening 20A may have a width that is in a range from 1% to 20% of a maximum diameter of heat shield body 12. In some examples, louver opening 20A has a width that is at least 1%, at least 2%, at least 3%, at least 4%, at least 5%, at least 10%, at least 12%, at least 15%, or at least 20% of the maximum diameter of heat shield body 12. In some examples, louver opening 20A has a width that is 20% or less, 15% or less, 12% or less, 10% or less, 5% or less, 4% or less, 3% or less, 2% or less, or 1% or less of the maximum diameter of heat shield body 12. In some examples, at least two louvers of plurality of louvers 14 (or of a sub-plurality of louvers 14) have a same louver opening width. In some examples, each louver of plurality of louvers 14 has a same louver opening width.

Louver opening 20A may have any suitable length (e.g., in a direction normal to a radial direction at a geometric center of louver opening 20A). For example, louver opening 20A may have a length that is in a range from 5% to 30% of a maximum diameter of heat shield body 12. In some examples, louver opening 20A has a length that is at least 5%, at least 10%, at least 15%, at least 20%, at least 25%, or at least 30% the maximum diameter of heat shield body 12. In some examples, louver opening 20A has a length that is 30% or less, 25% or less, 20% or less, 15% or less, 10% or less, or 5% or less of the maximum diameter of heat shield body 12. In some examples, at least two louvers of plurality of louvers 14 (or of a sub-plurality of louvers 14) have a same louver opening length. In some examples, each louver of plurality of louvers 14 (or of a sub-plurality of louvers 14) has a same louver opening length.

Louver opening 20A may alternatively, or in addition, may have a width defined relative to a respective length of louver opening 20A. For example, a width of louver opening 20A may be in a range from 10% to 50% of a length of louver opening 20A. In some examples, louver opening 20A has a width that is at least 10%, at least 20%, at least 30%, at least 40%, or at least 50% of the length of louver opening 20A. In some examples, louver opening 20A has a width that is 50% or less, 40% or less, 30% or less, 20% or less, or 10% or less, of the length of louver opening 20A.

Louver body 22A may have any suitable width (e.g., in a radial direction). For example, louver body 22A may have a width that is substantially the same as that of a corresponding louver opening 20A, or lesser or greater than that of the corresponding louver opening 20A. For example, in examples where louver body 22A is formed by a subtractive process, stamping, punching, or otherwise by machining of heat shield body 12, louver body 22A may have a width that is equal to or less than that of louver opening 20A. In examples where louver body 22A is formed by an additive process, welding, adhering, or attaching a separately formed louver body 22A to heat shield body 12, louver body 22A may have a width that is equal to, less than, or greater than that of louver opening 20A. In some examples, louver opening 20A and louver body 22A of at least one louver 14A of plurality of louvers 14 may have substantially a same length and a same width. In some examples, louver opening 20A and louver body 22A of at least one louver 14A of plurality of louvers 14 (or of a sub-plurality of louvers 14) have substantially a same length and a same width. In some examples, louver opening 20A and louver body 22A of each louver of plurality of louvers 14 (or of a sub-plurality of louvers 14) have substantially a same length and a same width.

Louver body 22A may extend at any suitable angle relative to heat shield body (or relative to louver opening 20A). The angle of louver body 22A may subtend a transverse opening between louver body 22A and louver opening 20A (or heat shield body 12). Thus, the angle of louver body 22A may determine the width of the transverse opening. For example, louver body 22A may extend at an angle in a range from 5° to 85° or in any intervening range, or from 15° to 75°, relative to heat shield body 12. In some examples, louver body 22A extends at an angle of at least 5°, at least 10°, at least 15°, at least 20°, at least 30°, at least 45°, or at least 50°, relative to heat shield body 12. In some examples, louver body 22A extends at an angle of 75° or less, 60° or less, 45° or less, 30° or less, 20° or less, 15° or less, or 10° or less, relative to heat shield body 12.

The material of louver body 22A may have any suitable thickness relative to a thickness of heat shield body 12. In examples in which louver body 22A smoothly, continuously, or integrally extends from heat shield body 12, louver body 22A may have a same thickness as that of heat shield body 12 (e.g., being formed from the same material or body as heat shield body 12). In some examples, louver body 22A may have any thickness that is less than, equal to, or greater than that of heat shield body 12.

One or more louvers of plurality of louvers 14 may extend away from heat shield body 12 in an outboard direction (inset from heat shield body 12 away from outboard face 18B) or in an inboard direction (outset from heat shield body 12 away from inboard face 18A).

In some examples, at least one louver 14A of plurality of louvers 14 extends away from heat shield body 12 in an outboard direction. For example, louver body 22A of louver 14A extends away from outboard face 18B of heat shield body 12, as seen in FIG. 1B. FIG. 1C is a partial perspective view of the brake heat shield of FIG. 1A showing a first sub-plurality of louvers 14A that are inset toward an outboard direction. In the example shown in FIG. 1C, first sub-plurality of louvers 14A each extend along the same direction (parallel to each other), and are each inset toward the outboard direction, extending away from outboard face 18B of heat shield body 12.

FIG. 1D is a partial perspective view of the brake heat shield of FIG. 1A showing a second sub-plurality of louvers 14B that are outset toward an inboard direction. FIG. 1E is a schematic cross-sectional view showing an air flow path 16B across a louver of second sub-plurality of louvers 14B of FIG. 1D. Thus, at least one louver 14B of plurality of louvers 14 may extend away from the heat shield body 12 in an inboard direction. For example, louver body 22B of louver 14B extends away from inboard face 18A of heat shield body 12, as seen in FIG. 1E. In the example shown in FIG. 1D, second sub-plurality of louvers 14B each extend along the same direction (parallel to each other), and are each outset toward the inboard direction, extending away from inboard face 18A of heat shield body 12.

Different types of louvers (e.g., louvers 14A and 14B differing in inset or outset, or any other difference in direction, orientation, angle, size, or shape) may be arranged in one or more sub-pluralities, or as individual louvers, in any predetermined pattern along heat shield body 12.

In some examples, plurality of louvers 14 includes first sub-plurality of louvers 14A and second sub-plurality of louvers 14B spaced from first sub-plurality of louvers 14A across a center 26 of heat shield body 12 (e.g., a central opening 26 as shown in FIG. 1A or a geometric center of heat shield body 12). The first sub-plurality 14A and the second sub-plurality 14B may be located at any suitable relative locations and/or orientations along heat shield body 12. For example, in the arrangement shown in FIG. 1A, heat shield body 12 is generally circular, first sub-plurality 14A is positioned at about a position corresponding to "12 o'clock" relative to center 26 of heat shield body 12, and second sub-plurality 14B is positioned at about a position corresponding to "7 o'clock" relative to center 26 of heat shield body 12. In some examples, plurality of louvers 14 further includes a third sub-plurality of louvers 14C positioned at about a position corresponding to "5 o'clock" relative to center 26 of heat shield body 12. In the example shown in FIG. 1A, each louver of plurality of louvers 14 extends along a direction that is normal (90°) to a radial direction (normal to a radial axis extending from center 26 to a respective geometric center of a louver 14). However, in other examples, different louvers of different sub-pluralities, or even within a sub-plurality, may extend in directions other than normal (other than 90°) and/or be positioned at any other relative circumferential and/or radial positions or orientations.

Brake heat shield 10 may include including a heat-resistant material extending between inboard face 18A and outboard face 18B. Brake heat shield 10 may be configured to be secured to a wheel assembly, for example, with outboard face 18B pointing in an outboard direction relative to the wheel assembly, and with inboard face 18A pointing in an inboard direction relative to the wheel assembly. However, outboard face 18B may or may not extend substantially to or adjacent to an outboard end of the wheel assembly, and inboard face 18A may or may not extend substantially to or adjacent to an inboard end of the wheel assembly.

The heat-resistant material may include at least one of a metal, an alloy, or a ceramic. In some examples, the heat-resistant material is additively deposited. For example, the heat-resistant material may include at least one of additively deposited metal, alloy, or a ceramic. In some examples, the alloy includes a steel (e.g., stainless steel) or a titanium alloy. In some examples, the heat-resistant material includes at least one of alumina, zirconia, aluminum nitride, silicon carbide, or silicon nitride. The heat-resistant material may be sintered, for example, thermally sintered. In some examples, brake heat shield 10 may include a preform configured to be thermally treated, for example, to remove a binder or a solvent, or to cause bonding, sintering, or diffusion of one or more component of the heat-resistant material.

Plurality of louvers 14 may include louvers having a homogeneous geometry or heterogenous geometry. For example, at least one louver 14 may differ from at least one another louver 12 in one or more of width (in a radial direction relative to center 26), length (in a circumferential direction relative to center 26), or inter-louver distance (in a circumferential or radial direction relative to center 26). In some examples, all louvers 14 are geometrically identical, accounting for manufacturing and measurement tolerances.

While a certain arrangement of louvers is shown in FIG. 1A, louvers may be arranged in any suitable pattern along heat shield body 12.

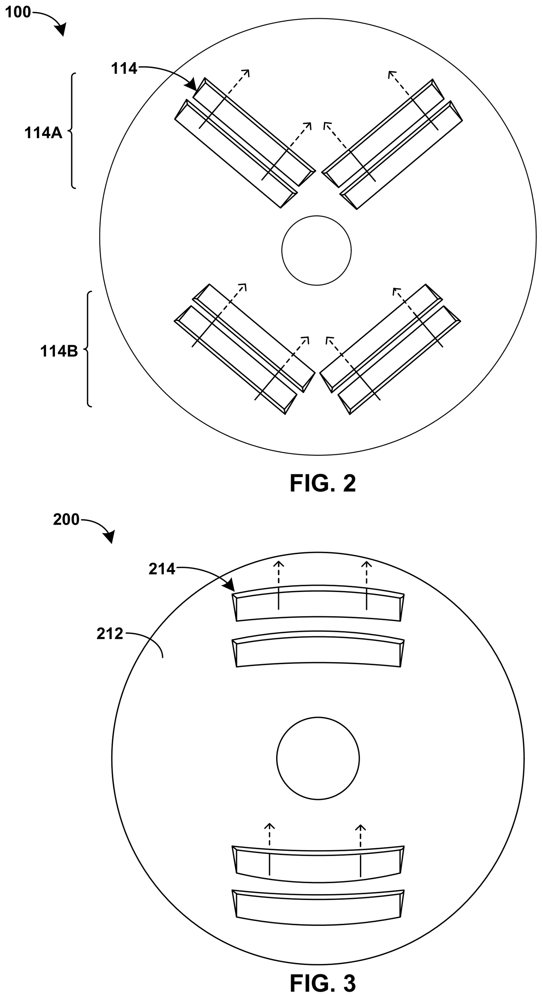

FIG. 2 is a front view of an example brake heat shield 100 including a plurality of louvers 114 arranged in a chevron pattern. For example, brake heat shield 100 may be substantially similar to brake heat shield 10, and plurality of louvers 114 may be substantially similar to louvers 14, but differing in overall arrangement. In some examples, the chevron pattern may include a first sub-plurality of louvers 114A that is inset, and a second sub-plurality of louvers 114B that is outset. However, any suitable inset/outset pattern may be used. For example, one, more than one, less than all, or all louvers of one or both of first sub-plurality of louvers 114A or second sub-plurality of louvers 114B may be inset or outset.

FIG. 3 is a front view of an example brake heat shield 200 including a plurality of louvers 214 arranged in a curved pattern. For example, at least one louver of plurality of louvers 214 may extend along a curved path (e.g., along a heat shield body 212 of brake heat shield 200). For example, brake heat shield 200 may be substantially similar to brake heat shield 10, heat shield body 212 may be substantially similar to heat shield body 12, and plurality of louvers 214 may be substantially similar to louvers 14, but differing in overall arrangement. One, more than one, less than all, or all louvers of plurality of louvers 214 may extend along a same or similar curved path (e.g., relative to a center or relative to a radial axis or a circumferential direction). In some examples, the curved path is a circular curved path (e.g., a circular arc). In the example shown in FIG. 3, the circular arc has a different diameter than that of heat shield body 212 (in particular, a greater diameter that that of heat shield body 212). In other examples, the circular arc may have the same diameter as that of heat shield body 212. In some examples, the curved path may include an elliptical curve, a polynomial curve, a spline, or any other predetermined suitable curve.

In some examples, a plurality of the louvers is arranged in a predetermined order of louver opening length along a heat shield body relative to a center of the heat shield body.

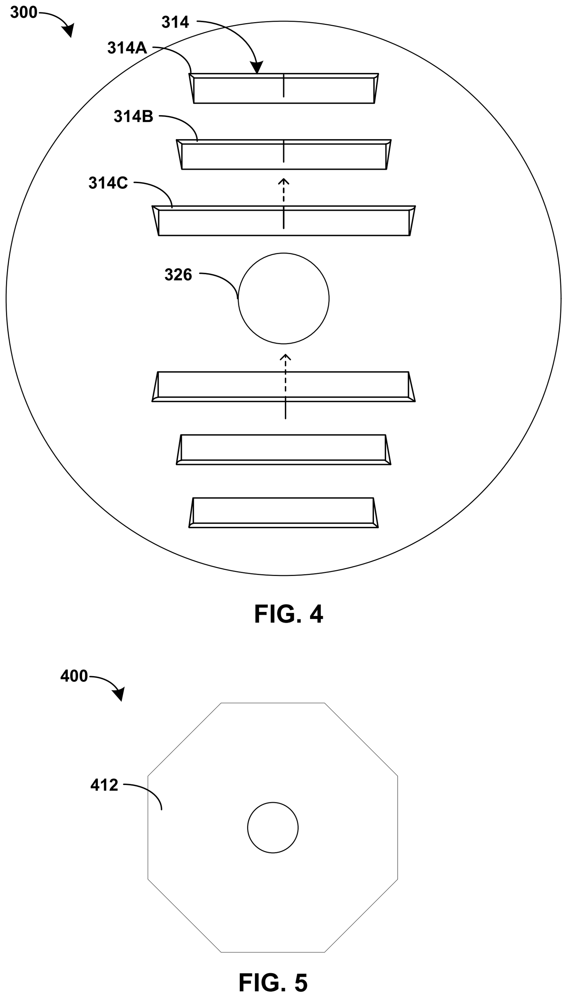

FIG. 4 is a front view of an example brake heat shield 300 including a plurality of louvers 314 having different lengths. For example, brake heat shield 300 may be substantially similar to brake heat shield 10, and plurality of louvers 314 may be substantially similar to louvers 14, but differing in overall arrangement. For example, plurality of louvers 314 includes a first louver 314A, a second louver 314B, and a third louver 314C, each having an increasing length in a direction radially approaching a center 326 of brake heat shield 300. However, any other arrangement of lengths (decreasing lengths, same lengths, or staggered lengths) relative to center 326, or otherwise along any portion of brake heat shield 300.

In the example shown in FIG. 1A, heat shield body 12 is disk-shaped. However, in other examples, a heat shield body of a brake heat shield may have any suitable shape. For example, the heat shield body may define a polygonal peripheral edge.

FIG. 5 is a front view of an example brake heat shield 400 including a heat shield body 412 having an octagonal peripheral edge. Brake heat shield 400 may include any type or arrangement of louvers described elsewhere in the disclosure.

In the example shown in FIG. 1A, heat shield body 12 includes a single layer. However, in other examples, a heat shield body of a brake heat shield may include multiple layers. For example, the brake heat shield may include two or more heat shield bodies respectively including louvers.

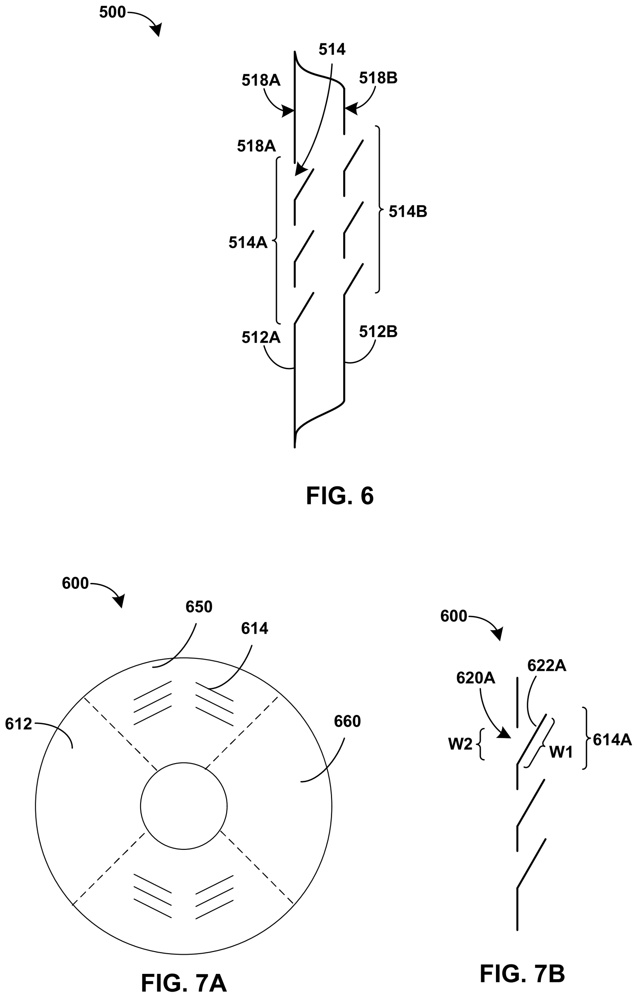

FIG. 6 is cross-sectional view illustrating an example brake heat shield 500 including a plurality of shield walls 512A and 512B defining a plurality of louvers 514. For example, brake heat shield 500 may be substantially similar to brake heat shield 10, each of shield walls 512A and 512B may be substantially similar to heat shield body 12, and plurality of louvers 514 may be substantially similar to louvers 14, but differing in overall arrangement. Thus, shield wall 512A is a first heat shield body, plurality of louvers 514 includes a first plurality of louvers 514A defined in the first heat shield body, shield wall 512B is a second heat shield body, and plurality of louvers 514 includes a second plurality of louvers 514B defined in the second heat shield body.

First plurality of louvers 514A may be offset from second plurality of louvers 514B (radially and/or circumferentially) such that the overall plurality of louvers 514 does not provide a direct radiant line for heat transfer. In this way, air may flow through louvers to provide a cooling effect, while avoiding or reducing an unintentional or inadvertent radiant heating of one or more components adjacent brake heat shield 500.

Brake heat shields according to the present disclosure may be formed by any suitable technique. For example, a sheet of metal or an alloy may be punched, stamped, or otherwise machined, to define louvers (e.g., louver openings and/or louver bodies) and heat shield bodies. Louvers may be formed before or after heat shield bodies. For example, blank heat shield bodies may be machined to form louvers. Alternatively, louvers may be first defined in a sheet of material, and then heat shield bodies cut out about the louvers. In other examples, additive manufacturing may be used to form brake heat shields.

FIG. 7A is a front view of an example brake heat shield 600 including an additively manufactured shield body 612. FIG. 7B is a partial perspective view of brake heat shield 600 of FIG. 7A. For example, brake heat shield 600 may be substantially similar to brake heat shield 10, heat shield body 612 may be substantially similar to heat shield body 12, and include a plurality of louvers 614 substantially similar to louvers 14. At least a segment 650 of brake heat shield 600 including or defining louvers 614 may be additively manufactured. For example, segment 650 may be additively manufactured and welded or otherwise coupled to another segment 660. In other examples, an entirety of heat shield body 612 is additively manufactured. For example, heat shield body 612 may include a unitary body. Heat shield body 612 may include at least one of additively deposited metal or alloy.

In case of additively manufactured heat shields, plurality of louvers 614 may include a louver 614A including a louver body 622A having a width (W1) greater than that of a louver opening 620A (W2). Such a geometric configuration may not be possible in case of a stamped or punched louver body, because a stamped or punched louver body may not extend beyond the louver opening formed by the stamping or opening. However, such a constraint is not present in case of additive manufacturing. Thus, in a brake heat shield such as brake heat shield 600, louver opening 620A and louver body 622A of at least one louver 614A of plurality of louvers 614 may differ in a width. In some such examples, the greater width W1 of louver body 622A may reduce or prevent a line-of-sight radiant heat transfer across louver opening 620A while allowing air flow through louver opening 620A.

FIG. 8 is a perspective view of an example wheel 700 including a plurality of rotor drive keys 740 on an interior surface 756 of wheel 700. In some examples, wheel 700 is a part of an aircraft vehicle. In other examples, wheel 700 may be a part of any other vehicle, such as, for example, any marine vessel, land vehicle, or other vehicle. Wheel 700 may include a rim 752 defining an exterior surface 754 and interior surface 756. Rim 752 may include tubewell 720, wheel hub 721, and outboard tubewell 722. In some examples, interior surface 756 may include an inner diameter of tubewell 720. For example, in some cases, interior surface 756 may be referred to as an inner diameter surface of wheel 700.

In some examples, a tire (not shown) may be mounted on exterior surface 754 of rim 752. For example, wheel 700 may include an inboard bead seat 724B and an outboard bead seat 724A configured to retain a tire on exterior surface 754 of rim 752.

Wheel 700 is configured to engage with one or more rotors (not shown in FIG. 8) of a braking assembly. For example, as shown in the example of FIG. 8, a plurality of rotor drive keys 740 are attached to interior surface 756, and each rotor drive key of the plurality of rotor drive keys 740 may be configured to engage with one or more rotors of a brake disc stack of a braking assembly. An example braking assembly is described in more detail with respect to FIG. 9.

The plurality of rotor drive keys 740 extending in the substantially axial direction may enable wheel 700 to slide onto a braking assembly. For example, a plurality of rotors of a braking assembly may include drive slots configured to receive the plurality of rotor drive keys 740, enabling the plurality of rotor drive keys 740 to be slid into respective drive slots of the plurality of rotors. In other examples, one or more rotor drive keys of the plurality of rotor drive keys 740 may be oriented in a different direction and/or may engage with one or more rotors in a different manner.

As illustrated in the example of FIG. 8, in some examples, the plurality of rotor drive keys 740 may be mounted at substantially equal circumferential distances around interior surface 756 of wheel 700. In other examples, one or more of the plurality of rotor drive keys 740 may be mounted a different circumferential distance from an adjacent rotor drive than at least one other rotor drive key. Here and elsewhere, circumferential distance means the length of an arc on the interior surface 756 of wheel 700 where the arc is in a plane perpendicular to the substantially axial direction of wheel 700. Rotor drive keys 740 may be integrally formed with tubewell 720 or may be separate from and mechanically affixed to tubewell 720.

FIG. 9 is a schematic cross-sectional view of an example wheel and brake assembly 815 including a wheel 800 and a braking assembly 858. Wheel and brake assembly 815 is shown and described to provide context to the example brake heat shields described in the present disclosure. The brake heat shields described in the present disclosure, however, may be used with any suitable wheel and brake assembly in other examples.

Wheel 800 includes tubewell 820, wheel hub 821, outboard tubewell 822, outboard bead seat 824A, and inboard bead seat 824B, rim 852, exterior surface 854, and interior surface 856, which may be configured individually and in relation to each other in the same manner as that discussed for the like-named components of wheel 700 (FIG. 8). Wheel 800 may be configured to be rotatably carried on axle 818. For example, wheel 800 may be rotatably carried on axle 818 by wheel hub 821. In turn, wheel 800 may impart motion to a vehicle including or mounted on the wheel and brake assembly 815. In the example shown in FIG. 9, tubewell 820 and outboard tubewell 822 are mechanically coupled by lug bolt 826 and lug nut 828. Other connection techniques may be used in other examples.

Braking assembly 858 includes an actuator assembly 814 and a brake stack 816. Actuator assembly 814 includes actuator housing 830 (also referred to as brake piston housing 830), actuator housing bolt 832, and piston 834. Brake stack 816 includes a plurality of brake discs, which include interleaved rotor brake discs 836 and stator brake discs 838. Rotor brake discs 836 are configured to move relative to stator brake discs 838, e.g., rotationally about axis A and axially along axis A relative to stator brake discs 838. Rotor brake discs 836 engage with wheel 800, and in particular tubewell 820, by rotor drive keys 840. Stator brake discs 838 are mounted to torque tube 842 by splines 844. Wheel and brake assembly 815 may support any variety of private, commercial, or military aircraft or other type of vehicle.

Wheel and brake assembly 815 may be mounted to a vehicle via axle 818. Torque tube 842 supports actuator assembly 814 and stator brake discs 838. Axle 818 may be mounted on a strut of a landing gear (not shown) or other suitable component of the vehicle to connect wheel and braking assembly 815 to the vehicle.

During operation of the vehicle, braking may be necessary from time to time, such as during landing and taxiing procedures of an aircraft. Wheel and brake assembly 815 is configured to provide a braking function to the vehicle via actuator assembly 814 and brake stack 816. Actuator assembly 814 includes actuator housing 830 and piston 834. Actuator assembly 814 may include different types of actuators such as one or more of, e.g., an electrical-mechanical actuator, a hydraulic actuator, a pneumatic actuator, or the like. During operation, piston 834 may extend away from actuator housing 830 to axially compress brake stack 816 against compression region 848 for braking.

Rotor brake discs 836 are slidably engaged with rotor drive keys 840 for common rotation with tubewell 820 and rotor drive keys 840. Stator brake discs 838 are mounted to torque tube 842 by splines 844. In the example of FIG. 9, brake stack 816 includes four rotors and five stators. However, a different number of rotors and/or stators may be included in brake stack 816 in other examples. Rotor brake discs 836 and stator brake discs 838 may provide opposing friction surfaces for braking an aircraft. In some examples, wheel and brake assembly 815 may include a wheel heat shield 810 between rotor brake discs 836 and tubewell 820 in order to, for example, limit thermal transfer between brake stack 816 and wheel 800.

Wheel and brake assembly further includes a brake heat shield 825 between brake piston housing 830 and brake stack 816. Brake heat shield 825 may include any brake heat shield according to the present disclosure, for example, brake heat shield 10, 100, 200, 300, 400, 500, or 600 described with reference to FIGS. 1A to 7A.

In some examples, splines 844 may be circumferentially spaced about an outer portion of torque tube 842. Stator brake discs 838 may include a plurality of radially inwardly disposed lug notches along an inner diameter of the brake disc configured to engage with splines 844. Similarly, rotor brake discs 836 may include a plurality of radially inwardly disposed drive slots along an outer periphery (e.g., an outer diameter in the case of a disc having a circular cross-section) of the rotor brake disc. The drive slots may be configured to engage with rotor drive keys 840. As such, rotor brake discs 836 will rotate with the motion of wheel 800 while stator brake discs 838 remain stationary, allowing the friction surfaces of an adjacent stator brake disc 838 and rotor brake disc 836 to engage with one another to decelerate the rotation of wheel 800.

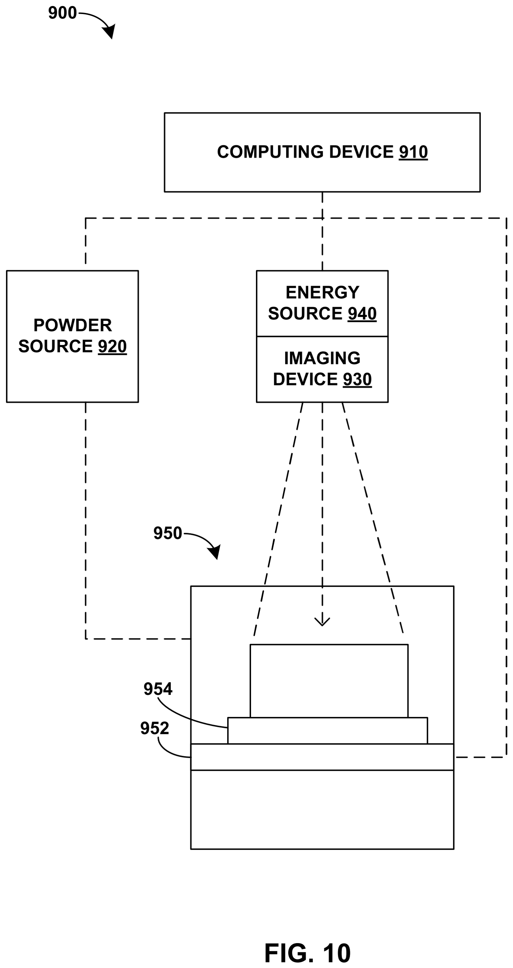

FIG. 10 is a block diagram illustrating an example system 900 for additively manufacturing a brake heat shield. While system 900 is described as an example, brake heat shields according to the present disclosure may be prepared using any other suitable systems. System 900 includes a computing device 910, a powder delivery device 920, an imaging device 930, an energy source 940, and a fabrication assembly 950.

Powder source 920 is configured to deliver a powder (or any other suitable form) of a heat-resistant material, for example, a metal or an alloy. The heat-resistant material may include a binder, for example, an organic or inorganic binder. Powder from powder source is transported to fabrication assembly 950, for example, over a platform 952. For example, powder source 920 may transfer powder via a roller, a wiper, or an arm to platform 952. Fabrication assembly 950 may include a build plate 954 configured to receive an initial layer of powder, and ultimately hold a component fabricated by deposition of powder. Imaging device 930 is configured to direct an energy beam (for example, a laser beam or an electron beam) from energy source 940 onto powder on build plate 954 based on a model, to form a layer of a plurality of layers.

Computing device 910 is configured to control components and operation of system 900 and may include, for example, a desktop computer, a laptop computer, a workstation, a server, a mainframe, a cloud computing system, or the like. Computing device 910 may be communicatively coupled to, and configured to control, powder source, imaging device 930, energy source 940, and fabrication assembly 950 using respective communication connections. System 900 may include one or more computing devices 910.

Computing device 910 is configured to control energy source 940, imaging device 930, and fabrication assembly 950 to selectively fuse powder, for example, by melting of powder or a binder component of the powder to form a patterned layer, based on the model. Computing device 910 may store the model in a memory of computing device 910. After a respective layer is formed, unfused powder may remain on build plate 954. The unfused powder may support subsequent layers. After each layer is completely formed, platform 952 is moved vertically, for example, away from the energy source, and additional powder deposited, so that the next layer may be formed via interaction of the energy beam and the powder. Ultimately, deposition of the entire plurality of layers results in formation of a component based on the model. Thus, system 900 may be used to fabricate a brake heat shield according to the present disclosure based on a model of the brake heat shield.

Computing device 910 may implement the techniques described in the present disclosure at least in part, in hardware, software, firmware, or any combination thereof. For example, computing device 910 may include one or more processors. Various aspects of the described techniques may be implemented within the one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of the present disclosure.

Such hardware, software, and firmware may be implemented within the same device (e.g., computing device 910) or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in the present disclosure may also be embodied or encoded in an article of manufacture including a computer-readable storage medium encoded with instructions. For example, computing device 910 may read the computer-readable storage medium and one or more processors of computing device 910 may execute the instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, the computer-readable storage medium includes a non-transitory medium. The term "non-transitory" may indicate that the storage medium is not embodied in a carrier wave or a propagated signal. In certain examples, a non-transitory storage medium stores data that can, over time, change (e.g., in RAM or cache).

While brake heat shields according to the present disclosure may be formed using powder bed additive systems, any other suitable additive manufacturing technique may be used, for example, bound powder extrusion, or non-powder based additive manufacturing techniques.

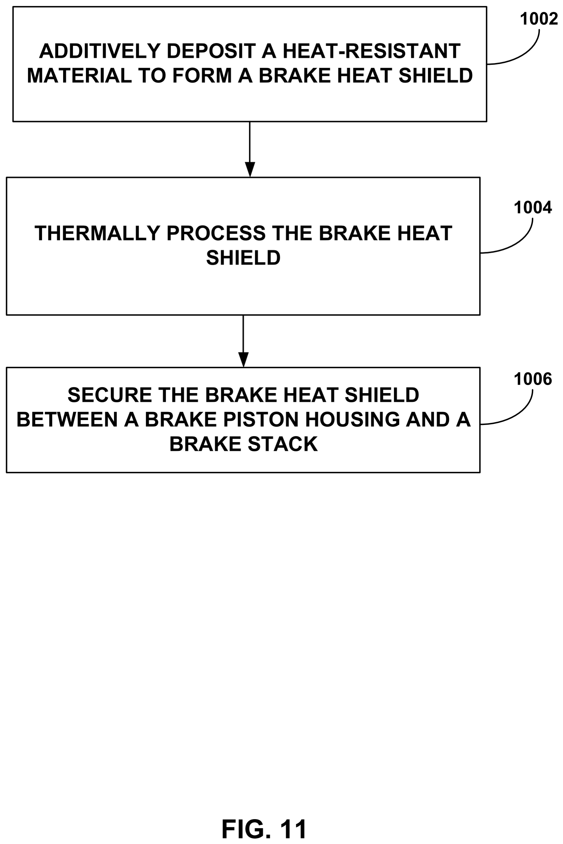

FIG. 11 is a flow diagram illustrating an example technique for forming a brake heat shield. While techniques according to FIG. 11 are described with reference to brake heat shield 10 of FIG. 1A formed using system 900 of FIG. 10, the techniques may be implemented using any suitable system to form any brake heat shield according to the present disclosure. Further, any suitable technique may be used to form brake heat shields according to the present disclosure.

The technique may include additively depositing a heat-resistant material to form brake heat shield 10 (1002). Brake heat shield 10 includes heat shield body 12 and plurality of louvers 14.

For example, the additively depositing (1002) may include powder bed deposition of the heat-resistant material. In some examples, computing device 910 of system 900 may store the model corresponding to brake heat shield 10 in the memory of computing device 910, and computing device 910 may control powder source 920, imaging device 930, energy source 940, and fabrication assembly 950 to fabricate brake heat shield 10 on build plate 954 based on the model.

The technique may further include thermal processing of brake heat shield 10 (1004). For example, brake heat shield 10 may be heated, tempered, sintered, or annealed. In some examples, the thermal processing may strengthen brake heat shield 10.

In some examples, the technique may further include assembling a plurality of segments into a single brake heat shield. For example, multiple segments may be joined by one or more of clips, pins, or fasteners to form an assembled brake heat shield.

The technique may further include securing brake heat shield 10 securing the brake heat shield between a brake piston housing (e.g., brake piston housing 830) and a brake stack (e.g., brake stack 816) (1006).

The following clauses illustrate example subject matter described herein.

Clause 1: A brake heat shield including: a heat shield body; and a plurality of louvers, each louver of the plurality of louvers including a respective louver opening defined by the heat shield body and a respective louver body extending from the heat shield body.

Clause 2: The brake heat shield of clause 1, wherein the plurality of louvers includes at least one louver parallel to at least one another louver.

Clause 3: The brake heat shield of clauses 1 or 2, wherein the plurality of louvers includes a first sub-plurality of louvers and a second sub-plurality of louvers spaced from the first sub-plurality of louvers across a center of the heat shield body.

Clause 4: The brake heat shield of any of clauses 1 to 3, wherein at least one louver of the plurality of louvers extends along a straight line.

Clause 5: The brake heat shield of any of clauses 1 to 4, wherein at least two louvers of the plurality of louvers have a same louver opening length and a same louver opening width.

Clause 6: The brake heat shield of any of clauses 1 to 5, wherein the respective louver body extends at an angle in a range from 15° to 75° relative to the heat shield body.

Clause 7: The brake heat shield of any of clauses 1 to 6, wherein at least one louver of the plurality of louvers extends away from the heat shield body in an outboard direction.

Clause 8: The brake heat shield of any of clauses 1 to 7, wherein the heat shield body is integral with the plurality of louvers.

Clause 9: The brake heat shield of clause 8, wherein the heat shield body includes at least one of additively deposited metal or alloy.

Clause 10: The brake heat shield of clause 9, wherein a louver body has a greater width than that of a louver opening.

Clause 11: The brake heat shield of any of clauses 1 to 10, wherein the plurality of louvers is arranged in a chevron pattern.

Clause 12: The brake heat shield of any of clauses 1 to 11, wherein at least one louver of the plurality of louvers extends along a curved path.

Clause 13: The brake heat shield of any of clauses 1 to 12, wherein the plurality of the louvers is arranged in a predetermined order of louver opening length along the heat shield body relative to a center of the heat shield body.

Clause 14: The brake heat shield of any of clauses 1 to 13, wherein the heat shield body defines a polygonal peripheral edge.

Clause 15: The brake heat shield of any of clauses 1 to 14, wherein the heat shield body is a first heat shield body, wherein the plurality of louvers is a first plurality of louvers, and wherein the brake heat shield further includes a second heat shield body and a second plurality of louvers defined by the second heat shield body.

Clause 16: An assembly including: a brake piston housing; a brake stack; and a brake heat shield between the brake piston housing and the brake stack, wherein the brake heat shield includes: a heat shield body; and at least one louver including a louver opening defined by the heat shield body and a louver body extending from the heat shield body.

Clause 17: The assembly of clause 16, further including a brake assembly, wherein the brake heat shield is between the brake assembly and the brake piston housing.

Clause 18: A method including: additively depositing a heat-resistant material to form a brake heat shield, wherein the brake heat shield includes: a heat shield body; and at least one louver including a louver opening defined by the heat shield body and a louver body extending from the heat shield body.

Clause 19: The method of clause 18, wherein the additively depositing includes powder bed deposition of the heat-resistant material.

Clause 20: The method of clauses 18 or 19, further including securing the brake heat shield between a brake piston housing and a brake stack.

Various examples have been described. These and other examples are within the scope of the following claims.

## Claims

1. A brake heat shield comprising:
a heat shield body; and
a plurality of louvers, each louver of the plurality of louvers comprising a respective louver opening defined by the heat shield body and a respective louver body extending from the heat shield body.

2. The brake heat shield of claim 1, wherein the plurality of louvers comprises at least one louver parallel to at least one another louver.

3. The brake heat shield of claim 1 or 2, wherein the plurality of louvers comprises a first sub-plurality of louvers and a second sub-plurality of louvers spaced from the first sub-plurality of louvers across a center of the heat shield body.

4. The brake heat shield of any one of claims 1 to 3, wherein at least one louver of the plurality of louvers extends along a straight line.

5. The brake heat shield of any one of claims 1 to 4, wherein the respective louver body extends at an angle in a range from 15° to 75° relative to the heat shield body.

6. The brake heat shield of any one of claims 1 to 5, wherein at least one louver of the plurality of louvers extends away from the heat shield body in an outboard direction.

7. The brake heat shield of any one of claims 1 to 6, wherein the heat shield body is integral with the plurality of louvers.

8. The brake heat shield of claim 7, wherein the heat shield body comprises at least one of additively deposited metal or alloy.

9. The brake heat shield of any one of claims 1 to 8, wherein the plurality of louvers is arranged in a chevron pattern.

10. The brake heat shield of any one of claims 1 to 9, wherein at least one louver of the plurality of louvers extends along a curved path.

11. The brake heat shield of any one of claims 1 to 10, wherein the plurality of the louvers is arranged in a predetermined order of louver opening length along the heat shield body relative to a center of the heat shield body.

12. The brake heat shield of any one of claims 1 to 11, wherein the heat shield body defines a polygonal peripheral edge.

13. An assembly comprising:
a brake piston housing;
a brake stack; and
the brake heat shield of any one of claims 1 to 12 between the brake piston housing and the brake stack.

14. A method comprising:
additively depositing a heat-resistant material to form the brake heat shield of any one of claims 1 to 12.

15. The method of claim 14, further comprising securing the brake heat shield between a brake piston housing and a brake stack.
